# EUROPÄISCHE PATENTANMELDUNG

(11) **EP 1 376 280 A2**
(43) Veröffentlichungstag der Anmeldung: **02.01.2004**
(21) Anmeldenummer: 03013776.4
(22) Anmeldetag: 18.06.2003
(51) Int. Cl.: G05B 19/409

(54) **Anpassung einer Bedienvorrichtung an das Benutzerverhalten**

(30) Priorität: 22.06.2002 DE 10227880
(71) Anmelder: Diehl AKO Stiftung & Co. KG, 88239 Wangen (DE)
(72) Erfinder: Arnold, Georg, 91126 Schwabach (DE)
(74) Vertreter: Diehl Patentabteilung

(57) **Zusammenfassung**

Es wird ein Verfahren zur Anpassung einer Bedienvorrichtung für ein elektrisches und/oder elektronisches Gerät an das Bedienverhalten eines Benutzers vorgeschlagen, wobei das elektrische/elektronische Gerät über mehrere, mittels der Bedienvorrichtung bedienbare Betriebszustände verfügt. Bei diesem Verfahren wird die Auswahl und/oder Einstellung der Betriebszustände durch den Benutzer in einem Speicher (21) gespeichert, die Anzahl, wie oft eine Auswahl und/oder eine Einstellung erfolgt ist, ermittelt und für die nächste Auswahl und/oder Einstellung eines Betriebszustandes diejenige vorgeschlagen, die am häufigsten erfolgt ist. Eine Bedienvorrichtung zur Durchführung des Verfahrens weist einen Speicher (21) zur Speicherung der erfolgten Auswahlen und/oder Einstellungen von Betriebszuständen, einen Zähler (22) zur Ermittlung der Anzahl, wie oft eine Auswahl und/oder eine Einstellung erfolgt ist, einen Kalkulator (23) zur Ermittlung der Häufigkeit einer Auswahl und/oder Einstellung und einen Komperator (24) zur Ermittlung der am häufigsten erfolgten Auswahl und/oder Einstellungen auf.

## Beschreibung

Die Erfindung betrifft ein Verfahren zur Anpassung einer Bedienvorrichtung an das Bedienverhalten eines Benutzers nach dem Oberbegriff des Patentanspruchs 1 sowie eine Bedienvorrichtung zur Durchführung dieses Verfahrens.

Bei bekannten Bedienvorrichtungen für elektrische und/oder elektronische Geräte, welche über mehrere Betriebszustände verfügen, wird dem Benutzer bei Inbetriebnahme entweder immer derselbe Betriebszustand oder der zuletzt ausgewählte Betriebszustand zur Auswahl und zur Einstellung vorgeschlagen. So werden z. B. bei Herdschaltuhren die einzelnen Betriebszustände Uhrzeit, Kurzzeit, Betriebsdauer und Betriebszeitende durch einfaches bzw. mehrfaches Drücken eines einzigen Tastschalters ausgewählt, wobei nach dem ersten Drücken des Tastschalters stets derselbe Betriebszustand (z. B. Kurzzeit) oder auch der vorher zuletzt angewählte Betriebszustand vorgeschlagen wird. Um andere Betriebszustände auswählen und einstellen zu können, muss der Benutzer den Tastschalter mehrmals betätigen.

Ebenso wird beim Einschalten einer Herdsteuerung für einen Küchenherd, welche mit z. B. berührungsempfindlichen Tastschaltern betätigt wird, stets dieselbe Kochplatte (z. B. vorne links) oder aber auch die zuletzt benutzte Kochplatte vorgeschlagen. Will der Benutzer eine andere Kochplatte verwenden, so muss er diese erst durch eventuell mehrmaliges Drücken eines Tastschalters auswählen, bevor er die gewünschte Heizleistung einstellen kann.

Nachteilig am genannten Stand der Technik ist, dass der Vorschlag eines auszuwählenden und einzustellenden Betriebszustandes unabhängig davon chen Betriebszustand der Benutzer nach seiner Gewohnheit üblicherweise zuerst auswählt bzw. einstellt, wenn er das Gerät in Betrieb nimmt.

Somit liegt der Erfindung die Aufgabe zugrunde, ausgehend von dem genannten Stand der Technik ein Verfahren zur Anpassung einer Bedienungsvorrichtung an das Bedienverhalten eines Benutzers und eine entsprechende Bedienvorrichtung zu schaffen, bei welcher die Bedienung für den Benutzer entsprechend seiner Gewohnheit vereinfacht wird.

Diese Aufgabe wird durch ein Verfahren mit den Merkmalen des Patentanspruchs 1 sowie eine Bedienvorrichtung gemäß Patentanspruch 7 erfüllt. Die abhängigen Ansprüche erläutern vorteilhafte Ausgestaltungen und Weiterbildungen der Erfindung.

Kemgedanke der Erfindung ist es, dass der Benutzer bei jeder Inbetriebnahme des elektrischen/elektronischen Gerätes denjenigen Betriebszustand zur Auswahl und/oder zur Einstellung vorgeschlagen bekommt, den er vorher am häufigsten benutzt hat. Dabei kann vorgesehen sein, dass dies nur dann erfolgt, wenn die Häufigkeit der Auswahl bzw. Einstellung des Betriebszustandes über einem ersten Schwellenwert, d. h. über einem voreingestellten Prozentsatz liegt. Liegt die Häufigkeit keiner Betriebszustandsauswahl und/oder -einstellung über diesem ersten Schwellenwert, wird eine fest voreingestellte oder auch die zuletzt erfolgte Auswahl bzw. Einstellung vorgeschlagen.

In Weiterbildung kann vorgeschlagen sein, dass ein zweiter, gegenüber dem ersten Schwellenwert kleinerer Schwellenwert vorgesehen ist, bei dessen Unterschreitung von einem Vorschlag der am häufigsten erfolgten Auswahl bzw. Einstellung wieder auf einen Vorschlag einer fest voreingestellten oder der zuletzt erfolgten Auswahl bzw. Einstellung umgeschaltet wird. Durch die Tatsache, dass der zweite Schwellenwert kleiner ist als der erste, entsteht eine Hysterese, die verhindert, dass bei Häufigkeitswerten nahe den Schwellenwerten ein häufiges Umschalten zwischen Vorschlag der am häufigsten erfolgten Auswahl/Einstellung und Vorschlag der voreingestellten oder zuletzt erfolgten Auswahl/Einstellung entsteht, was den Benutzer sehr verwirren könnte.

In bevorzugter Ausgestaltung beträgt der erste Schwellenwert 90 % und der zweite Schwellenwert 70 %.

Eine Bedienvorrichtung zur Durchführung dieses Verfahrens weist einen Speicher zur Speicherung der erfolgten Auswahlen und/oder Einstellungen von Betriebszuständen, einen Zähler zur Ermittlung der Anzahl, wie oft eine Auswahl und/oder eine Einstellung erfolgt ist, einen Kalkulator zur Ermittlung der Häufigkeit einer Auswahl und/oder Einstellung und einen Komperator zur Ermittlung der am häufigsten erfolgten Auswahl und/oder Einstellung auf.

Darüber hinaus ist in bevorzugter Ausgestaltung der Erfindung ein Diskriminator vorgesehen, welcher entscheidet, ob die Häufigkeit einer Auswahl und/oder Einstellung den ersten Schwellenwert überschritten bzw. unter den zweiten Schwellenwert gefallen ist.

Eine Ausführung der Erfindung sieht vor, dass die Bedienvorrichtung eine Herdsteuerung für einen Küchenherd ist, dass die Betriebszustände die Anwahl der verschiedenen Heizzonen, insbesondere der Kochplatten des Herdes sind und dass das Einstellen des Betriebszustandes das Eingeben der Heizleistung für die angewählte Heizzone ist.

In alternativer Ausführung der Erfindung ist vorgesehen, dass die Bedienvorrichtung eine Schaltuhr für einen Küchenherd ist, dass die Betriebszustände die verschiedenen Schaltprogramme (insbesondere Uhrzeit, Kurzzeit, Betriebsdauer und Betriebszeitende) der Schaltuhr sind und dass das Einstellen des Betriebszustandes die Eingabe eines Zeitwertes für das angewählte Schaltprogramm ist.

Die Erfindung bewirkt, dass dem Benutzer bei Inbetriebnahme des Gerätes zuerst derjenige Betriebszustand zur Auswahl und/oder diejenige Einstellung dieses Betriebszustandes vorgeschlagen wird, den bzw. die der Benutzer nach seiner Gewohnheit am häufigsten benutzt.

Anhand der Zeichnungen soll im folgenden die Erfindung näher erläutert werden.
Es zeigen:
- Figur 1: ein Blockdiagramm für eine Herdsteuerung einer Kochmulde und
- Figur 2: ein Blockdiagramm des Verfahrensablaufs.

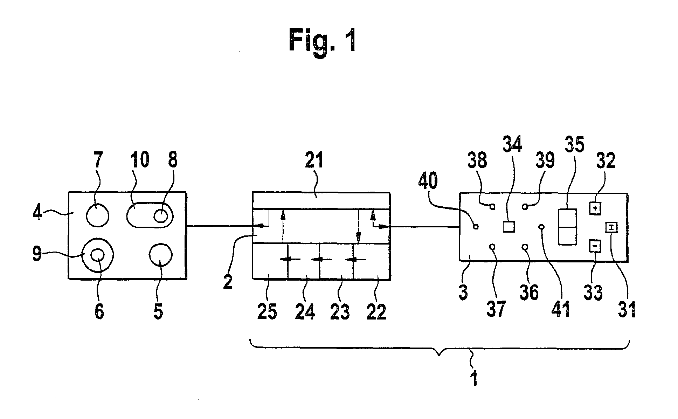

Eine Herdsteuerung 1, die aus einer Steuereinheit 2 und einer Bedieneinheit 3 besteht, dient der Steuerung einer Herdmulde 4, welche Kochplatten 5 bis 8 mit Zweikreiszuschaltung 9 und Bräterzuschaltung 10 aufweist (siehe Fig. 1). Die Steuereinheit 2 weist einen Speicher 21, einen Zähler 22, einen Kalkulator 23, einen Komperator 24 und einen Diskriminator 25 auf, welche alle oder auch nur teilweise in einem IC oder einem Mikrokontroller gebildet sein können und deren Funktionsweise weiter unten erläutert wird. Das Bedienelement 3 weist einen Tastschalter 31, einen Plustaster 32, einen Minustaster 33 und einen Kochplattenwahltaster 34 sowie eine Siebensegmentanzeige 35, den Kochplatten 5 bis 8 zugeordnete Anzeigeleuchten 36 bis 39, der Zweikreiszuschaltung 9 und der Bräterzuschaltung 10 zugeordnete Anzeigeleuchten 40 und 41 auf.

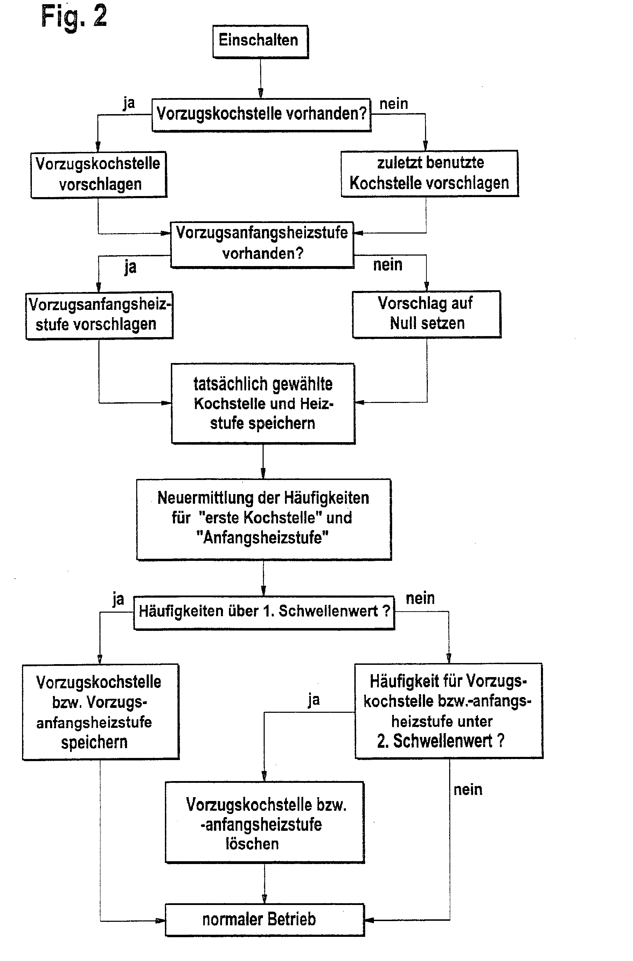

Nach dem Einschalten der Herdsteuerung mittels des Tasters 31 wird abgefragt, ob im Speicher 21 eine Vorzugskochstelle hinterlegt ist (siehe Fig. 2). Ist dies der Fall, so wird diese (z. B. die Kochplatte 6 mit Zweikreiszuschaltung 9) angewählt und es leuchten die entsprechenden Anzeigeleuchten 37 und 40. Ist keine Vorzugskochstelle hinterlegt, wird die zuletzt benutzte Kochstelle (z. B. die Kochplatte 5) eingeschaltet.

Nun wird abgefragt, ob zu der eingeschalteten Kochstelle eine Vorzugsanfangsheizstufe im Speicher 21 hinterlegt ist. Ist dies der Fall, wird diese an der Siebensegmentanzeige 35 blinkend angezeigt und kann durch Betätigen des Plustasters 32 bestätigt werden, wodurch dann die angewählte Kochstelle mit dieser Anfangsheizstufe beheizt wird. Ist keine Vorzugsanfangsheizstufe im Speicher 21 hinterlegt (oder wird der Vorschlag nach einer gewissen Zeit nicht bestätigt), wird die Heizstufe für die gewählte Kochstelle auf Null gesetzt. In beiden Fällen kann die Heizstufe mit den Tastern 32 und 33 erhöht bzw. erniedrigt werden. Auch kann durch eventuell mehrmaliges Drücken des Tasters 34 eine andere als die vorgeschlagene Kochstelle (z. B. die Kochplatte 8 ohne Bräterzuschaltung 10) angewählt werden.

Die tatsächlich gewählte Kochstelle und die tatsächlich eingestellte Anfangsheizstufe werden im Speicher 21 gespeichert. Nun werden die Häufigkeiten für die "erste angewählte Kochstelle nach dem Einschalten" und für die "Anfangsheizstufe für die jeweilige Kochstelle" neu ermittelt. Dazu ermittelt der Zähler 22, wie oft jede Kochstufe (jeweils mit und ohne Zweikreis- bzw. Bräterzuschaltung) als erste Kochstelle nach dem Einschalten der Herdsteuerung angewählt wurde und wie oft die verschiedenen Kochstufen für die einzelnen Kochstellen als Anfangsheizstufen eingestellt wurden. Aus dem Ergebnis ermittelt der Kalkulator 23 die relativen Häufigkeiten für die verschiedenen Kochstellen und Anfangsheizstufen, und der Komperator 24 ermittelt daraus die jeweils am häufigsten gewählte "erste Kochstelle" bzw. "Anfangsheizstufe". Im Diskriminator 25 wird entschieden, ob diese Häufigkeiten über einem ersten Schwellenwert von 90 % liegen, d. h. ob in 90 % der Fälle nach dem Einschalten der Herdsteuerung 1 die "häufigste erste Kochstelle" angewählt wird bzw. in 90 % der Fälle für eine Kochstelle die "häufigste Anfangsheizstufe" (für jede Kochstelle getrennt oder über alle Kochstellen gemeinsam) eingestellt wird. Falls dies der Fall ist, wird die Vorzugskochstelle bzw. die Vorzugsanfangsheizstufe im Speicher 21 hinterlegt. Falls dies nicht der Fall ist, wird im Diskriminator 25 weiterhin geprüft, ob die Häufigkeit für die Vorzugskochstelle bzw. die Vorzugsanfangsheizstufe unter einen zweiten Schwellenwert von 70 % gefallen ist. Falls dies der Fall ist, wird die Vorzugskochstelle bzw. die Vorzugsanfangsheizstufe aus dem Speicher 21 gelöscht.

Somit ist beim nächsten Einschalten der Herdsteuerung im Speicher 21 der Steuereinheit 2 die dem Verhalten des Benutzers aktuell angepasste "erste Kochstelle nach dem Einschalten" und "Anfangsheizstufe" hinterlegt. Um statistische Unsicherheiten und damit einhergehende starke Schwankungen in den Häufigkeiten zu eliminieren, kann vorgesehen sein, dass Vorzugskochstelle und Vorzugsanfangsheizstufe erst nach einer Mindestanzahl von vorzugsweise 10 Einschaltvorgängen der Herdsteuerung gespeichert werden.

Das beschriebene Verfahren lässt sich auch auf andere Steuerungen übertragen, so z. B. auf Schaltuhren oder Herdschaltuhren. Bei diesen wird ermittelt, welches der verschiedenen Schaltprogramme der Benutzer bevorzugt verwendet und welche Zeitwerte er für die einzelnen Schaltprogramme am häufigsten eingibt. Auch hier werden diese Vorzugsdaten gespeichert. Bei einer Aktivierung der Schaltuhr wird dasjenige Schaltprogramm zuerst vorgeschlagen, welches vom Benutzer am häufigsten verwendet wird. Ebenso wird bei Anwahl der verschiedenen Schaltprogramme jeweils der Zeitwert vorgeschlagen, der vom Benutzer für dieses Programm am häufigsten eingegeben wurde. Ebenso wird eine Hysterese eingebaut, so dass Vorzugseinstellungen nur dann gespeichert werden, wenn ihre Häufigkeit über einem höherem ersten Schwellenwert liegt, und sie nur dann wieder gelöscht werden, wenn ihre Häufigkeit unter einen niedrigeren zweiten Schwellenwert fällt.

Allgemein ist weiterhin möglich, dass eine Reihenfolge der Betriebszustände und/oder der jeweiligen Einstellungen gemäß ihrer relativen Häufigkeit festgelegt wird und diese Betriebszustände bzw. Einstellungen gemäß dieser Reihenfolge dem Benutzer vorgeschlagen werden, so dass dieser zuerst die häufigste Auswahl bzw. Einstellung vorgeschlagen bekommt, sodann die zweithäufigste, danach die dritthäufigste usw.

Weiterhin ist es möglich, dass überprüft wird, ob ein Benutzer nach dem Einschalten oft den vorher zuletzt gewählten Betriebszustand wiederum anwählt. Dann wird ihm in Zukunft stets der zuletzt angewählte Betriebszustand vorgeschlagen. Ebenso kann mit den Einstellwerten verfahren werden. Falls festgestellt wird, dass ein Benutzer keinen bevorzugten Betriebszustand hat, sondern sehr oft wechselt und alle Betriebszustände benutzt, kann auch mit einem standardmäßig fest hinterlegtem Betriebszustand begonnen werden.

Darüber hinaus ist es auch denkbar, dass zwischen drei Alternativen der Vorschlagsermittlung (fest voreingestellter Betriebszustand, zuletzt eingestellter Betriebszustand, am häufigsten verwendeter Betriebszustand) umgeschaltet wird, was ebenfalls wieder für den Vorschlag der Einstellwerte übertragbar ist.

## Patentansprüche

1. Verfahren zur Anpassung einer Bedienvorrichtung für ein elektrisches und/oder elektronisches Gerät an das Bedienverhalten eines Benutzers, wobei das elektrische/elektronische Gerät über mehrere, mittels der Bedienvorrichtung bedienbare Betriebszustände verfügt,
**dadurch gekennzeichnet,**
**dass** die Auswahl und/oder die Einstellung der Betriebszustände durch den Benutzer in einem Speicher (21) gespeichert wird, dass die Anzahl, wie oft eine Auswahl und/oder eine Einstellung erfolgt ist, ermittelt wird und dass für die nächste Auswahl und/oder Einstellung eines Betriebszustandes diejenige vorgeschlagen wird, die am häufigsten erfolgt ist.

2. Verfahren nach Anspruch 1,
**dadurch gekennzeichnet,**
**dass** ein erster Schwellenwert für die Häufigkeit einer erfolgten Auswahl und/oder Einstellung bestimmt wird, dass eine voreingestellte oder die zuletzt erfolgte Auswahl und/oder Einstellung vorgeschlagen wird, wenn die Häufigkeit keiner Auswahl und/oder Einstellung über dem ersten Schwellenwert liegt, dass aber die am häufigsten erfolgte Auswahl und/oder Einstellung vorgeschlagen wird, sobald deren Häufigkeit den ersten Schwellenwert übersteigt.

3. Verfahren nach Anspruch 2,
**dadurch gekennzeichnet,**
**dass** ein zweiter Schwellenwert, der unter dem ersten Schwellenwert liegt, bestimmt wird, dass die am häufigsten erfolgte Auswahl und/oder Einstellung vorgeschlagen wird, solange deren Häufigkeit noch über dem zweiten Schwellenwert liegt, dass aber eine voreingestellte oder die zuletzt erfolgte Auswahl und/oder Einstellung vorgeschlagen wird, wenn die Häufigkeit dieser Auswahl und/oder Einstellung unter den zweiten Schwellenwert fällt.

4. Verfahren nach Anspruch 3,
**dadurch gekennzeichnet,**
**dass** der erste Schwellenwert 90 % und der zweite Schwellenwert 70 % beträgt.

5. Verfahren nach einem der Ansprüche 1 bis 4,
**dadurch gekennzeichnet,**
**dass** die Bedienvorrichtung eine Herdsteuerung (1) für einen Küchenherd (4) ist, dass gespeichert wird, wie oft die verschiedenen Heizzonen, insbesondere die Kochplatten (5 bis 10) des Herdes (4) angewählt und/oder verschiedene Heizleistungen, insbesondere als Anfangsheizleistungen, für die verschiedenen Heizzonen eingegeben werden, dass beim Einschalten der Herdsteuerung (1) diejenige Heizzone und/oder diejenige Heizleistung vorgeschlagen werden, die am häufigsten angewählt bzw. eingegeben wurden, wobei der Vorschlag der am häufigsten angewählten Heizzone und/oder eingestellten Heizleistung vorzugsweise erst dann, wenn die Häufigkeit den ersten Schwellenwert übersteigt, und solange erfolgt, bis die Häufigkeit unter den zweiten Schwellenwert fallt.

6. Verfahren nach einem der Ansprüche 1 bis 4,
**dadurch gekennzeichnet,**
**dass** die Bedienvorrichtung eine Schaltuhr für einen Küchenherd ist, dass gespeichert wird, wie oft die verschiedenen Schaltprogramrne, insbesondere Uhrzeit, Kurzzeit, Betriebsdauer und Betriebszeitende, der Schaltuhr angewählt und/oder verschiedene Zeitwerte für die verschiedenen Schaltprogramme eingegeben werden, dass bei der Anwahl von Schaltprogrammen zuerst dasjenige Schaltprogramm und/oder derjenige Zeitwert vorgeschlagen werden, das bzw. der am häufigsten angewählt bzw. eingegeben wurde, wobei der Vorschlag des am häufigsten angewählten Schaltprogramms und/oder eingestellten Zeitwertes vorzugsweise erst dann, wenn die Häufigkeit den ersten Schwellenwert übersteigt, und solange erfolgt, bis die Häufigkeit unter den zweiten Schwellenwert fällt.

7. Bedienvorrichtung für ein elektrisches und/oder elektronisches Gerät mit mehreren, mittels der Bedienvorrichtung bedienbaren Betriebszuständen, zur Durchführung des Verfahrens nach einem der vorherigen Ansprüche,
**dadurch gekennzeichnet,**
**dass** ein Speicher (21) zur Speicherung der erfolgten Auswahlen und/oder Einstellungen von Betriebszuständen, ein Zähler (22) zur Ermittlung der Anzahl, wie oft eine Auswahl und/oder eine Einstellung erfolgt ist, ein Kalkulator (23) zur Ermittlung der Häufigkeit einer Auswahl und/oder Einstellung und ein Komparator (24) zur Ermittlung der am häufigsten erfolgten Auswahl und/oder Einstellung vorgesehen sind.

8. Bedienvorrichtung nach Anspruch 7,
**dadurch gekennzeichnet,**
**dass** ein Diskriminator (25) vorgesehen ist zur Entscheidung, ob die Häufigkeit einer Auswahl und/oder Einstellung noch unter oder bereits über dem ersten bzw. noch über oder bereits unter dem zweiten Schwellenwert liegt.

9. Bedienvorrichtung nach Anspruch 7 oder 8,
**dadurch gekennzeichnet,**
**dass** die Bedienvorrichtung eine Herdsteuerung (1) für einen Küchenherd (4) ist, dass die Betriebszustände die Beheizungen der verschiedenen Heizbereiche, insbesondere der verschiedenen Kochplatten (5 bis 10) des Herdes (4) sind, dass die Auswahl eines Betriebszustandes die Anwahl eines Heizbereiches ist und die Einstellung eines Betriebszustandes die Eingabe der Heizleistung für den angewählten Heizbereich ist.

10. Bedienvorrichtung nach Anspruch 7 oder 8,
**dadurch gekennzeichnet,**
**dass** die Bedienvorrichtung eine Schaltuhr für einen Küchenherd ist, dass die Betriebszustände die verschiedenen Schaltprogramme, insbesondere Uhrzeit, Kurzzeit, Betriebsdauer und Betriebszeitende sind, dass die Auswahl eines Betriebszustandes die Anwahl eines Schaltprogramms ist und die Einstellung eines Betriebszustandes die Eingabe eines Zeitwertes für das angewählte Schaltprogramm ist.
